(19) Europäisches Patentamt
European Patent Office
Office européen des brevets

(11) Veröffentlichungsnummer: **0 287 953 A2**

(12) **EUROPÄISCHE PATENTANMELDUNG**

(21) Anmeldenummer: **88105961.2**

(22) Anmeldetag: **14.04.88**

(51) Int. Cl.4: **C08L 67/02 , C08K 3/00 , C08K 5/00 , //(C08L67/02, 27:12)**

(30) Priorität: **24.04.87 DE 3713747**

(43) Veröffentlichungstag der Anmeldung: **26.10.88 Patentblatt 88/43**

(84) Benannte Vertragsstaaten: **BE DE FR GB NL**

(71) Anmelder: **BASF Aktiengesellschaft**
**Carl-Bosch-Strasse 38**
**D-6700 Ludwigshafen(DE)**

(72) Erfinder: **McKee, Graham Edmund, Dr.**
**Kastanienweg 8**
**D-6940 Weinheim(DE)**
Erfinder: **Ittemann, Peter, Dr.**
**Wilhelm-Busch-Strasse 87**
**D-6700 Ludwigshafen(DE)**
Erfinder: **Simon, Georg Nikolaus, Dr.**
**Untere Hart 10**
**D-6703 Limburgerhof(DE)**
Erfinder: **Kleber, Friedrich**
**Hermann-Hesse-Strasse 5**
**D-6520 Worms 25(DE)**
Erfinder: **Schlichting Karl, Dr.**
**Virchowstrasse 12**
**D-6712 Bobenheim-Roxheim(DE)**

(54) **Flammgeschützte thermoplastische Polyesterformmassen.**

(57) Flammgeschützte thermoplastische Formmassen auf der Basis aromatischer Polyester, enthaltend als wesentliche Komponenten

A) 30 bis 90 Gew.%

eines Polyesters einer aromatischen Dicarbonsäure und einem aliphatischen oder aromatischen Glykol

B) 5 bis 30 Gew.%

eines Flammschutzmittels

C) 3 bis 15 Gew.%

einer synergistisch wirkenden Metallverbindung eines Metalls der fünften Hauptgruppe des Periodensystems

D) 0,01 bis 3 Gew.%

eines fluorhaltigen Ethylenpolymerisats, welches homogen verteilt in der Formmasse vorliegt und einen mittleren Teilchendurchmesser (Zahlenmittelwert) von 0,05 bis 10 $\mu$ aufweist, sowie darüber hinaus

E) 0 bis 50 Gew.%

eines schlagzäh modifizierenden Kautschuks

F) 0 bis 50 Gew.%

faser-oder teilchenförmigen Füllstoffen oder deren Mischungen

EP 0 287 953 A2

G) 0 bis 50 Gew.%
eines Polycarbonats oder eines Polyamids.

## Flammgeschützte thermoplastische Polyesterformmassen

Die Erfindung betrifft flammgeschützte thermoplastische Formmassen auf der Basis aromatischer Polyester, enthaltend als wesentliche Komponenten

A) 20 bis 90 Gew.%

eines Polyesters einer aromatischen Dicarbonsäure und einem aliphatischen oder aromatischen Glykol

B) 5 bis 30 Gew.%

eines Flammschutzmittels

C) 0 bis 15 Gew.%

einer synergistisch wirkenden Metallverbindung eines Metalls der fünften Hauptgruppe des Periodensystems

D) 0,01 bis 3 Gew.%

eines fluorhaltigen Ethylenpolymerisats, welches homogen verteilt in der Formmasse vorliegt und einen mittleren Teilchendurchmesser (Zahlenmittelwert) von 0,05 bis 10 $\mu$ aufweist, sowie darüber hinaus

E) 0 bis 50 Gew.%

eines schlagzäh modifizierenden Kautschuks

F) 0 bis 50 Gew.%

faser-oder teilchenförmigen Füllstoffen oder deren Mischungen

G) 0 bis 70 Gew.%

eines Polycarbonats oder eines Polyamids.

Außerdem betrifft die Erfindung ein Verfahren zur Herstellung derartiger thermoplastischer Formmassen, deren Verwendung zur Herstellung von Formkörpern und Formkörper, die aus den erfindungsgemäßen thermoplastischen Formmassen als wesentlichen Komponenten erhältlich sind.

Aus der US-A-3 671 487 sind glasfaserverstärkte Polyesterformmassen bekannt, die ein Flammschutzmittel und eine geringe Menge, vorzugsweise 0,5 bis 2,5 Gew.% Polytetrafluorethylen (PTFE) enthalten. Ausweislich Spalte 5, Zeile 75 bis Spalte 6, Zeile 4 ist es vorteilhaft das PTFE in Form relativ großer Teilchen einzusetzen, da dies zu besseren Ergebnissen führe als die Verwendung von Teilchen mit Durchmessern von 0,05 bis 0,5 $\mu$m. Diese Formmassen befriedigen hinsichtlich ihres Tropfverhaltens bei niedrigen PTFE-Konzentrationen, insbesondere unter 0,5 Gew.% nicht voll.

In der US-A-4 344 878 werden glasfaserfreie Formmassen aus Polyestern, Flammschutzmittel und PTFE beschrieben. Als bevorzugtes PTFE wird wie im oben erwähnten US-PS 3 671 487 Teflon®-6 der Fa. DuPont beschrieben, d.h. ein PTFE mit großer Teilchengröße. Aus diesem Grund leiden auch diese Formmassen unter dem gleichen Mangel wie die in der US-A-3 671 487 beschriebenen Produkte.

In der DE-A-26 15 071 wird ein Verfahren zur Herstellung einer thermoplastischen Polyesterformmasse beschrieben, wobei ein Polyester mit Flammschutzmitteln und einer wäßrigen PTFE-Dispersion vermischt und anschließend der Polyester geschmolzen wird. Auch hier finden sich keine Andeutungen über die Bedeutung der Teilchengröße des PTFE im Endprodukt. Darüber hinaus treten bei dem Verfahren unter Umständen Probleme bei der homogenen Einarbeitung des PTFE in den Polyester auf.

Aufgabe der vorliegenden Erfindung war es daher, flammgeschützte thermoplastische Formmassen auf der Basis aromatischer Polyester zur Verfügung zu stellen, die die vorstehend geschilderten Nachteile nicht aufweisen und auf einfachem, sicherheitstechnisch unbedenklichen Wege herzustellen sind.

Diese Aufgabe wird erfindungsgemäß durch die eingangs definierten flammgeschützten thermoplastischen Formmassen gelöst.

Bevorzugte Ausführungsformen der Erfindung sind den Unteransprüchen zu entnehmen.

Als Komponente A enthalten die erfindungsgemäßen Formmassen einen Polyester einer aromatischen Dicarbonsäure und einem aliphatischen oder aromatischen Glykol.

Eine erste Gruppe bevorzugter Polyester sind Polyalkylenterephthalate mit 2 bis 10 C-Atomen im Alkoholteil.

Derartige Polyalkylenterephthalate sind an sich bekannt und in der Literatur beschrieben. Sie enthalten einen aromatischen Ring in der Hauptkette, der von der aromatischen Dicarbonsäure herrührt. Der aromatische Ring kann auch substituiert sein, z.B. durch Halogen wie Chlor und Brom oder durch $C_1$-$C_4$-Alkylgruppen wie Methyl-, Ethyl-, i-bzw. n-Propyl-und n-, i-bzw. t-Butylgruppen.

Diese Polyalkylenterephthalate können durch Umsetzung von aromatischen Dicarbonsäuren, deren Estern oder anderer esterbildender Derivate derselben mit aliphatischen Dihydroxyverbindungen in an sich bekannter Weise hergestellt werden.

Als bevorzugte Dicarbonsäuren sind Naphthalindicarbonsäure, Terephthalsäure und Isophthalsäure oder deren Mischungen zu nennen. Bis zu 30 Mol.%, vorzugsweise nicht mehr als 10 Mol.% der aromatischen

Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4-Cyclohexandiol und Neopentylglykol oder deren Mischungen bevorzugt.

Als besonders bevorzugte Polyester A) sind Polyalkylenterephthalate, die sich von Alkandiolen mit 2 bis 6 C-Atomen ableiten, zu nennen. Von diesen werden insbesondere Polyethylenterephthalat und Polybutylenterephthalat bevorzugt.

Die relative Viskosität der Polyester A) liegt im allgemeinen im Bereich von 1,2 bis 1,8 (gemessen in einer 0,5 gew.%igen Lösung in einem Phenol/o-Dichlorbenzolgemisch (Gew.-Verh. 1:1 bei 25°C).

Dies entspricht Viskositätszahlen von etwa 80 bis 170, vorzugsweise 110 bis 150, gemessen in 0,5 gew.%iger Lösung in Phenol/o-Dichlorbenzol (Gew.-Verh. 1:1) nach DIN 53 726/8 bei 25°C mit einem Ubbelohde-Viskosimeter.

Als weitere Gruppe sind voll aromatische Polyester zu nennen, die sich von aromatischen Dicarbonsäuren und aromatischen Dihydroxyverbindungen ableiten.

Als aromatische Dicarbonsäuren eignen sich die bereits bei den Polyalkylenterephthalaten beschriebenen Verbindungen. Bevorzugt werden Mischungen aus 5 bis 100 mol.% Isophthalsäure und 0 bis 95 mol.% Terephthalsäure, insbesondere etwa äquivalente Mischungen dieser beiden Säuren.

Die aromatischen Dihydroxyverbindungen haben vorzugsweise die allgemeine Formel

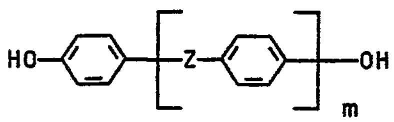

oder deren kernsubstituierte $C_1$-$C_6$-Alkyl-oder Halogenderivate, wobei Z eine Alkylen-oder Cycloalkylengruppe mit bis zu 8 C-Atomen, eine Arylengruppe mit bis zu 12 C-Atomen,

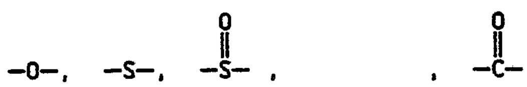 oder

eine chemische Bindung darstellt und m Wert 0 oder 1 hat.

Beispielsweise seien

Dihydroxydiphenyle,
Di-(hydroxyphenyl)alkane,
Di-(hydroxyphenyl)cycloalkane,
Di-(hydroxyphenyl)sulfide,
Di-(hydroxyphenyl)ether,
Di-(hydroxyphenyl)ketone,
Di-(hydroxyphenyl)sulfoxide,
α,α'-Di-(hydroxyphenyl)-dialkylbenzole,
Resorcin und
Resorcin und
Hydrochinon sowie deren kernalkylierte oder kernhalogenierte Derivate genannt.

Von diesen werden

4,4'-Dihydroxydiphenyl,
2,4-Di-(4'-hydroxyphenyl)-2-methylbutan
α,α'-Di(4-hydroxyphenyl)-p-diisopropylbenzol,
2,2-Di(3'-methyl-4'-hydroxyphenyl)propan und
2,2-Di-(3'-chlor-4'-hydroxyphenyl)propan, insbesondere

2,2-Di-(4'-hydroxyphenyl)propan
2,2-Di(3',5'-dichlordihydroxyhenyl)propan,
1,1-Di-(4'-hydroxyphenyl)cyclohexan und
2,2-Di-(3',5'-dimethyl-4'-hydroxyphenyl)propan oder deren Mischungen

bevorzugt.

Es versteht sich, daß auch Mischungen von Polyalkylenterephthalaten und vollaromatischen Polyestern eingesetzt werden können. Diese enthalten im allgemeinen 20 bis 98 Gew.% des Polyalkylenterephthtalates und 2 bis 80 Gew.% des vollaromatischen Polyesters.

Der Anteil des Flammschutzmittels B) beträgt 5 bis 30, vorzugsweise 7 bis 25 Gew.%, bezogen auf das Gesamtgewicht der Formmassen. Die eingesetzte Menge hängt von der Art des Flammschutzmittels ab; in der Regel sollte sich bei halogenhaltigen Flammschutzmitteln ein Gesamthalogengehalt von 3 bis 10 Gew.% ergeben. Bei Verwendung von rotem Phosphor werden in der Regel 2 bis 10 Gew.% eingesetzt; phosphorhaltige organische Verbindungen werden entsprechend bemessen, so daß sich ein vergleichbarer Phosphorgehalt ergibt.

Die Flammschutzmittel B umfassen eine bekannte Gruppe chemischer Verbindungen. Allgemein enthalten die bedeutenderen dieser Verbindungen chemische Elemente, die wegen ihrer Fähigkeit, eine Flammbeständigkeit zu verleihen, verwendet werden, wie Brom, Chlor, Antimon, Phosphor und Stickstoff.

Zu den verwendbaren halogenhaltigen Verbindungen gehören solche der folgenden Formel:

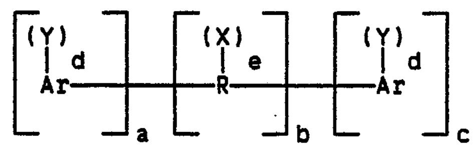

worin R $C_1$-$C_{10}$-Alkylen; Alkyliden oder eine cycloaliphatische Gruppe ist, wie Methylen, Ethylen, Propylen, Isopropylen, Isopropyliden, Butylen, Isobutylen, Amylen, Cyclohexylen, Cyclopentyliden, ferner kann R eine Ether-, Carbonyl-, Amino-oder eine schwefelhaltige Gruppe, wie Sulfid, Sulfoxid, Sulfon, oder eine phosphorhaltige Gruppe sein. R kann auch aus zwei oder mehr Alkylen-oder Alkylidengruppen bestehen, die durch eine aromatische Amino-, Ether-, Carbonyl-, Sulfid-, Sulfoxid-, Sulfon-oder eine phosphorhaltige Gruppe miteinander verbunden sind.

Ar und Ar′ sind gleiche oder verschiedene mono-oder polycarbocyclische aromatische Gruppen, wie Phenylen, Bipenylen, Terphenylen und Naphthylen.

Y ist ausgewählt aus organischen, anorganischen und organometallischen Resten. Die durch Y repräsentierten Substituenten umfassen.

1. Halogen, wie Chlor, Brom, Iod oder Fluor oder
2. Ethergruppen der allgemeinen Formel OE, wobei E ein X-ähnlicher, einwertiger Kohlenwasserstoffrest ist oder
3. einwertige Kohlenwasserstoffgruppen der durch R repräsentierten Art oder
4. andere Substituenten, wie Nitro und Cyano, wobei diese Substituenten im wesentlichen inert sind, vorausgesetzt, daß mindestens ein und vorzugsweise zwei Halogenatome pro Arylkern vorhanden sind.

X ist eine einwertige Kohlenwasserstoffgruppe, für die beispielsweise die folgenden Reste stehen können: $C_1$-$C_{10}$-Alkyl wie Methyl, Ethyl, Propyl, Isopropyl, Butyl, Decyl, Aryl wie Phenyl, Naphthyl, Biphenyl, Xylyl und Tolyl, Aralkyl wie Benzyl und Ethylphenyl, Cycloalkyl wie Cyclopentyl und Cyclohexyl, ebenso wie einwertige Kohlenwasserstoffgruppen, die inerte Substitueneten aufweisen. Sind mehrere Substituenten X vorhanden, können diese gleich oder verschieden sein.

Der Parameter d ist eine ganze Zahl von 1 bis zum Maximaläquivalent der ersetzbaren Wasserstoffe an den aromatischen Ringen Ar und Ar′. Der Parameter e ist eine ganze Zahl von 0 bis zu der Zahl ersetzbarer Wasserstoffe an den Substituenten R. Die Parameter a, b und c sind ganze Zahlen einschließlich 0. Wenn b nicht 0 ist können weder a noch c 0 sein. Wenn b gleich 0 ist, sind die aromatischen Gruppen durch eine direkte Kohlenstoff-Kohlenstoff-Bindung miteinander verbunden.

Die Substituenten Y an den aromatischen Gruppen Ar und Ar′ können in Ortho-, Meta-oder Parastellung stehen.

In den Rahmen der obigen Formel fallen Biphenyle, von denen die folgenden Beispiele genannte seien:

2,2-Bis-(3,5-dichlorphenyl)propan
Bis-(2-chlorphenyl)methan
Bis-(2,6-dibromphenyl)methan
1,1-Bis-(4-iodphenyl)ethan
1,2-Bis-(2,6-dichlorphenyl)ethan
1,1-Bis-(2-chlor-4-iodphenyl)ethan
1,1-Bis-(2-chlor-4-methylphenyl)ethan

1,1-Bis-(3,5-dichlorphenyl)ethan
2,2-Bis-(3-phenyl4-bromphenyl)ethan
2,6-Bis-(4,6-dichlornaphthyl)propan
2,2-Bis-(2,6-dichlorphenyl)pentan
2,2-Bis-(3,5-dichlorphenyl)hexan
Bis-(4-chlorphenyl)phenylmethan
Bis-(3,5-dichlorphenyl)cyclohexylmethan
Bis-(3-nitro-4-bromphenyl)methan
Bis-(4-hydroxy-2,6-dichlor-3-methoxyphenyl)-methan
2,2-Bis-(3,5-dichlor-4-hydroxyphenyl)propan
2,2-Bis-(3-brom-4-hydroxyphenyl)propan

Weitere unter unter die obige Formel fallende Verbindungen sind 2,2'-Dichlordiphenyl, 2,4'-Dichlor-oder 2,4'-Dibromdiphenyl, Hexa-, Octa-oder Decabromodiphenyle und halogenierte Diphenylether, insbesondere Octabrom-und Decabromdiphenylether.

Die Herstellung dieser und anderer anwendbarer Biphenyle ist bekannt. Anstelle der in den obigen Beispielen vorhandenen zweiwertigen aliphatischen Gruppe kann auch eine Sulfidgruppe, eine Sulfoxygruppe oder eine ähnliche andere Gruppe stehen.

Bevorzugte Phosphorverbindungen sind elementarer Phosphor oder organische Phosphorsäure, Phosphonate, Phosphinate, Phosphonite, Phosphinite, Phosphenoxyde, Phosphene, Phosphite oder Phosphate. Als Beispiel sei Triphenylphosphenoxid genannt. Dieses kann allein oder vermischt mit Hexabrombenzol oder einem chlorierten Biphenyl und, wahlweise, Antimontrioxid verwendet werden.

Typische Beispiele für die vevorzugten Phosphorverbindungen, die in der vorliegenden Erfindung verwendet werden können, sind solche der folgenden allgemeinen Formel

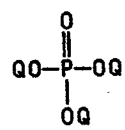

worin Q für gleiche oder verschiedene Reste steht, einschließlich Kohlenwasserstoffresten, wie Alkyl, Cycloalkyl, Aryl, alkylsubstituiertes Aryl und arylsubstituiertes Alkyl, ferner Halogen, Wasserstoff und deren Kombinationen, vorausgesetzt, daß mindestens einer der für Q stehenden Reste ein Arylrest ist. Beispiele solcher geeigneter Phosphate sind z.B. die folgenden: Phenylbisdodecylphosphat, Phenylbisneopentylphosphat, Phenylethylenhydrogenphosphat, Phenyl-bis-(3,5,5'-trimethylhexylphosphat), Ethyldiphenylphosphat, 2-Ethylhexyldi(p-tolyl)phosphat, Diphenylhydrogenphosphat, Bis-(2-ethylhexyl)phenylphosphat, Tri-(nonylphenyl)phosphat, Phenylmethylhydrogenphosphat, Di(dodecyl)-p-tolylphosphat, Tricresylphosphat, Triphenylphosphat, Dibutylphenylphosphat, Diphenylhydrogenphosphat. Die bevorzugten Phosphate sind solche, bei denen jedes Q Aryl ist. Das am meisten bevorzugte Phosphat ist Triphenylphosphat. Weiter ist die Kombination von Triphenylphosphat mit Hexabrombenzol und Antimontrioxid bevorzugt.

Als Flammschutzmittel sind auch solche Verbindungen geeignet, die Phosphor-Stickstoff-Bindungen enthalten, wie Phosphonitrilchlorid, Phosphorsäureesteramide, Phosphorsäureamide, Phosphonsäureamide, Phosphinsäureamide, Tris(Aziridinyl)-phosphinoxid oder Tetrakis(hydroxymethyl)phosphoniumchlorid. Diese entflammungshemmenden Additive sind käuflich erhältlich.

Weitere halogenhaltige Flammschutzmittel sind Tetrabrombenzol, Hexachlorbenzol und Hexabrombenzol sowie halogenierte Polystyrole oder Polyphenylenether, wie sie kommerziell erhältlich sind.

Auch die in der DE-A-19 46 924 beschriebenen halogenierten Phthalimide können verwendet werden. Von diesen hat insbesondere N,N'-Ethylenbistetrabromphthalimid, welches unter der Bezeichnung Saytex® BT 93 im Handel erhältlich ist, Bedeutung erlangt.

Schließlich seien als Beispiele für phosphorfreie halogenhaltige Flammschutzmittel noch bromierte Oligocarbonate der allgemeinen Formel

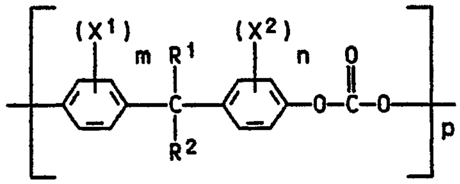

genannt, wobei
$R^1$ und $R^2$ ein Wasserstoffatom, eine $C_1$-$C_4$-Alkylgruppe oder eine Arylgruppe,
$X^1$ und $X^2$ Chlor oder Brom darstellen,
m und n einen Wert von 1, 2, 3 oder 4 und p einen Wert im Bereich von 2 bis 20 haben.

Diese oligomeren Additive weisen auch bei Temperaturen über 200°C eine geringe Flüchtigkeit auf.

Als Komponente C enthalten die erfindungsgemäßen Formmassen 0 bis 15 Gew.%, vorzugsweise 3 bis 12 Gew.% einer synergistisch wirkenden Metallverbindung eines Metalls der fünften Hauptgruppe des Periodensystems. Hier sei als Beispiel nur Antimontrioxid erwähnt, welches besonders bevorzugt wird.

Bei den fluorhaltigen Ethylenpolymerisaten D, die homogen in der Formmasse verteilt vorliegen, handelt es sich um Polymerisate des Ethylens mit einem Fluorgehalt von etwa 55 bis 76 Gew.%, vorzugsweise 70 bis 76 Gew.%. Beispiele hierfür sind Polytetrafluorethylen (PTFE), Tetrafluorethylen-Hexafluorethylen-Copolymere oder Tetrafluorethylen-Copolymerisate mit kleineren Anteilen (in der Regel bis zu 50 Gew.%) copolymerisierbarer ethylenisch ungesättigter Monomerer. Diese werden zum Beispiel von Schildknecht in "Vinyl and Related Polymers", Wiley-Verlag, 1952, Seite 484 bis 494 und von Wall in "Fluorpolymers" (Wiley Interscience, 1972) beschrieben. Wesentlich ist, daß die Komponente D homogen verteilt in der Formmasse vorliegt und eine Teilchengröße $d_{50}$ (Zahlenmittelwert) im Bereich von 0,05 bis 10, vorzugsweise von 0,1 bis 5 µm aufweist. Diese geringen Teilchengrößen lassen sich besonders bevorzugt durch Verwendung von wäßrigen Dispersionen von fluorhaltigen Ethylenpolymerisaten und deren Einarbeitung in eine Polyesterschmelze erzielen. Darauf wird weiter unten ausführlich eingegangen. Der Anteil der Komponente D beträgt 0,01 bis 3, vorzugsweise 0,1 bis 2,0 Gew.%, bezogen auf das Gesamtgewicht der Formmasse.

Als weitere Komponente E können die erfindungsgemäßen Formmassen 0 bis 50, vorzugsweise 5 bis 40 und insbesondere 5 bis 35 Gew.%, jeweils bezogen auf das Gesamtgewicht der Formmassen, eines - schlagzäh modifizierenden Kautschuks enthalten.

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl-bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961), Seiten 392 bis 406 und in der Monographie von C.B. Bucknall, "Toughened Plastics" (Applied Science Publishers, London, 1977) beschrieben.

Im folgenden werden einige bevorzugte Arten solcher Elastomerer vorgestellt.

Als erste bevorzugte Gruppe sind die sogenannten Ethylen-Propylen (EPM) bzw. Ethylen-Propylen-Dien-(EPDM)-kautschuke zu nennen, die vorzugsweise ein Verhältnis von Ethylenresten zu Propylenresten im Bereich von 40:60 bis 65:35 aufweisen.

Die Mooney-Viskositäten (MLI+4/100°C) solcher unvernetzter EPM bzw. EPDM-Kautschuke (Gelgehalte im allgemeinen unter 1 Gew.%) liegen bevorzugt im Bereich von 25 bis 100, insbesondere von 35 bis 90 (gemessen am großen Rotor nach 4 Minuten Laufzeit bei 100°C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht konjugierte Diene mit 5 bis 25 C-Atomen wie 1,4-Butadien, 1,4-Hexadien, 1,5-Hexadien, 2,5-Dimethyl-1,5-hexadien und 1,4-Octadien, cyclische Diene wie Cyclopentadien, Cyclohexadien, Cyclooctadien und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexadiene-1,5-Ethyldien-Norbornen und Dicyclopentadien. Der Diengehalt der EPDM-Kautschuke beträgt vorzugsweise 0,5 bis 10, insbesondere 1 bis 8 Gew.%, bezogen auf das Gesamtgewicht des Kautschuks.

EPM-bzw. EPDM-Kautschuke können auch mit reaktiven Carbonsäuren oder deren Derivaten gepfropft sein. Hier seien nur stellvertretend Acrylsäure, Methacrylsäure und deren Derivate sowie Maleinsäureanhydrid genannt.

Eine weitere Gruppe bevorzugter Kautschuke sind Copolymere des Ethylens mit Acrylsäure-und/oder Methacrylsäureestern, insbesondere solche die zusätzlich noch Epoxy-Gruppen enthalten. Diese Epoxygruppen werden vorzugsweise durch Zugabe von Epoxygruppen enthaltenden Monomeren der allgemeinen Formeln I oder II zum Monomerengemisch in den Kautschuk eingebaut

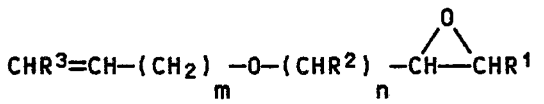 (I)

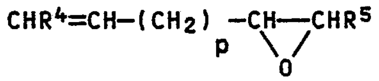 (II)

wobei $R^1$, $R^2$, $R^3$, $R^4$ und $R^5$ Wasserstoff oder Alkylgruppen mit 1 bis 6 C-Atomen darstellen, m eine ganze Zahl von 0 bis 20, n eine ganze Zahl von 0 bis 10 und p eine ganze Zahl von 0 bis 5 ist.

Bevorzugt sind $R^1$, $R^2$ und $R^3$ Wasserstoff, m hat den Wert 0 oder 1 und n ist 1. Die entsprechenden Verbindungen sind Alkylglycidylether oder Vinylglycidylether.

Bevorzugte Beispiele für Verbindungen der Formel I sind Epoxygruppen-enthaltende Ester der Acrylsäure und/oder Methacrylsäure, wovon wiederum Glycidylacrylat und Glycidylmethacrylat besonders bevorzugt werden.

Der Ethylengehalt der Copolymeren liegt im allgemeinen im Bereich von 50 bis 98 Gew.%, der Anteil an Epoxygruppen enthaltenden Monomeren und der Anteil des Acrylsäure-und/oder Methacrylsäureesters jeweils im Bereich von 1 bis 49 Gew.%.

Besonders bevorzugt sind Copolymerisate aus

50 bis 98, insbesondere 60 bis 95 Gew.% Ethylen,
1 bis 40, insbesondere 3 bis 20 Gew.% Glycidylacrylat und/oder Glycidylmethacrylat,
1 bis 45, insbesondere 10 bis 35 Gew.% n-Butylacrylat und/oder 2-Ethylhexylacrylat.

Weitere bevorzugte Ester der Acryl-und/oder Methacrylsäure sind die Methyl-, Ethyl-, Propyl-und i-bzw. t-Butylester.

Daneben können auch Vinylester und Vinylether als Comonomere eingesetzt werden.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur. Entsprechende Verfahren sind in der Literatur beschrieben.

Der Schmelzindex der Ethylencopolymeren liegt im allgemeinen im Bereich von 1 bis 80 g/10 min (gemessen bei 190°C und 2,16 kg Belastung).

Bevorzugte Elastomere (Kautschuke) C) sind weiterhin Pfropfcopolymerisate mit Butadien, Butadien/Styrol-, Butadien/Acrylnitril und Acrylestern, wie sie z.B. in den DE-A-16 94 173 und DE-A-23 48 377 beschrieben werden.

Von diesen sind insbesondere die sogenannten ABS-Polymerisate zu nennen, wie sie in den DE-A-20 35 390, DE-A-22 48 242 und der EP-A-22 216 beschrieben werden, wobei letztere besonders bevorzugt sind.

Als Kautschuk C) können auch Pfropfpolymerisate aus

25 bis 98 Gew.% eines Acrylatkautschuks mit einer Glasübergangstemperatur von unter -20°C als Pfropfgrundlage

und

2 bis 75 Gew.% eines copolymerisierbaren ethylenisch ungesättigten Monomeren, dessen Homo-bzw. Copolymerisate eine übergangstemperatur von mehr als 25°C aufweisen, als Pfropfauflage

eingesetzt werden.

Die Pfropfgrundlage sind Acrylat bzw. Methacrylatkautschuke, wobei bis zu 40 Gew.% weiterer Comonomerer enthalten sein können. Die $C_1$-$C_8$-Ester der Acrylsäure bzw. Methacrylsäure sowie deren

halogenierte Derivate wie auch aromatische Acrylsäureester und deren Mischungen werden bevorzugt. Als Comonomere in der Pfropfgrundlage seien Acrylnitril, Methacrylnitril, Styrol, α-Methylstyrol, Acrylamide, Methacrylamide sowie Vinyl-$C_1$-$C_6$-Alkylether angeführt.

Die Pfropfgrundlage kann unvernetzt oder teilweise oder vollständig vernetzt sein. Die Vernetzung wird durch Copolymerisation von vorzugsweise 0,02 bis 5 Gew.%, insbesondere 0,05 bis 2 Gew.% eines vernetzenden Monomeren mit mehr als einer Doppelbindung erzielt. Geeignete vernetzende Monomere werden z.B. in der DE-A-27 26 256 und der EP-A-50 265 beschrieben.

Bevorzugte vernetzende Monomere sind Triallylcyanurat, Triallylisocyanurat, Triacryloylhexahydro-s-triazin und Trialkylbenzole.

Falls die vernetzenden Monomeren mehr als 2 polymerisierbare Doppelbindungen aufweisen, ist es vorteilhaft ihre Menge auf nicht mehr als 1 Gew.%, bezogen auf die Pfropfgrundlage, zu beschränken.

Besonders bevorzugte Pfropfgrundlagen sind Emulsionspolymerisate mit einem Gelgehalt von mehr als 60 Gew.% (bestimmt in Dimethylformamid bei 25°C nach M. Hoffmann, H. Krömer, R. Kuhn, Polymeranalytik, Georg-Thieme-Verlag, Stuttgart, 1977).

Ebenfalls geeignet als Pfropfgrundlage sind Acrylat-Kautschuke mit einem Dienkern, wie sie z.B. in der EP-A-50 262 beschrieben werden.

Als Pfropfmonomere eignen sich besonders Styrol, α-Methylstyrol, Acrylnitril, Methacrylnitril und Methylmethacrylat oder deren Mischungen, insbesondere solche aus Styrol und Acrylnitril im Gewichtsverhältnis 90/10 bis 50/50.

Die Pfropfausbeute, d.h. der Quotient aus der Menge des aufgepfropften Monomeren und der Menge des eingesetzten Pfropfmonomeren liegt im allgemeinen im Bereich von 20 bis 80 %.

Kautschuke auf der Basis von Acrylaten, die erfindungsgemäß verwendet werden können, werden z.B. in der DE-A-24 44 584 und der DE-A-27 26 256 beschrieben.

Die Kautschuke C weisen eine Glasübergangstemperatur von unter -30°C, insbesondere von unter -40°C auf, was zu einer guten Schlagzähigkeit auch bei tiefen Temperaturen führt.

Es versteht sich, daß auch Mischungen der vorstehend aufgeführten Kautschuktypen eingesetzt werden können.

Als faser-oder teilchenförmige Füllstoffe seien Kohlenstoffasern, Glasfasern, Glaskugeln, amorphe Kieselsäure, Asbest, Calciumsilicat, Calciummetasilicat, Magnesiumcarbonat, Kaolin, Kreide, gepulverter Quarz, Glimmer, Bariumsulfat und Feldspat genannt, die in Mengen von bis zu 50 Gew.%, insbesondere 5 bis 50 Gew.% eingesetzt werden.

Als Komponente G können die erfindungsgemäßen Formmassen 0 bis 70, insbesondere 0 bis 40 und bevorzugt 5 bis 40 Gew.% eines Polycarbonats oder eines Polyamids enthalten. Diese sind an sich bekannt und in der Literatur beschrieben.

Vorzugsweise können diese Polycarbonate durch Umsetzung von Kohlensäurederivaten wie Phosgen oder Diphenylcarbonat mit Diphenolen hergestellt werden. Grundsätzlich sind alle Diphenole verwendbar, wie sie z.B. in der Monographie von H. Schnell, "Chemistry and Physics of Polycarbonates", Interscience Publishers, 1964 sowie der US-A-2 999 835 und der DE-A-22 48 817 genannt sind. Dihydroxydiphenyl, Di-(hydroxyphenyl)-alkane und Di-(hydroxyphenyl)ether oder deren Mischungen sind besonders bevorzugte Diphenole.

Ein besonders bevorzugtes Diphenol ist 2,2-Di-(4'-hydroxyphenyl)propan (Bisphenol A). Dies kann auch in Mischung mit anderen Diphenolen wie 2,2-Di-(4'-hydroxyphenyl)pentan, 2,6-Dihydroxynaphthalin, 4,4'-Dihydroxydiphenylsulfon, Di-(4-hydroxyphenyl)ether, Di-(4-hydroxyphenyl)sulfit, Di-(4-hydroxyphenyl)-methan, 1,1-Di-(4'-hydrxyphenyl)ethan oder 4,4-Dihydroxydiphenyl eingesetzt werden. Der Anteil an Bisphenol A in derartigen Mischungen liegt im allgemeinen im Bereich von 70 bis 98 Gew.%.

Verfahren zur Herstellung derartiger Polycarbonate sind an sich bekannt und z.B. in den bereits erwähnten US-A-2 999 835 und DE-A-22 48 817 sowie den DE-A-13 00 266 und DE-A-14 95 730 beschrieben.

Die relative Viskosität der Polycarbonate B) liegt im allgemeinen im Bereich von 1,2 bis 1,5, vorzugsweise 1,28 bis 1,40 dl/g, gemessen in 0,5 gew.%iger Lösung in Dichlormethan bei 25°C.

Anstelle des Polycarbonats kann auch ein thermoplastisches Polyamid, z.B. Polycaprolactam, Polyhexamethylenadipinsäureamid oder Polyhexamethylensebacinsäureamid eingesetzt werden.

Neben den Komponenten A) bis G) können die erfindungsgemäßen Formmassen übliche Zusatzstoffe und Verarbeitungshilfsmittel enthalten. Deren Anteil beträgt im allgemeinen bis zu 60, vorzugsweise bis zu 50 Gew.%, bezogen auf das Gesamtgewicht der Komponenten A) bis G).

Übliche Zusatzstoffe sind beispielsweise Stabilisatoren und Oxidationsverzögerer, Mittel gegen Wärmezersetzung und Zersetzung durch ultraviolettes Licht, Gleit-und Entformungsmittel, Färbemittel, wie Farbstoffe und Pigmente, faser-und pulverförmige Füll-und Verstärkungsmittel, Keimbildungsmittel und Weichmacher.

Oxidationsverzögerer und Wärmestabilisatoren, die den thermoplastischen Massen gemäß der Erfindung zugesetzt werden können, sind z.B. Halogenide von Metallen der Gruppe I des periodischen Systems, z.B. Natrium-, Kalium-, Lithium-Halogenide, ggf. in Verbindung mit Kupfer-(I)-Halogeniden, z.B. Chloriden, Bromiden oder Iodiden. Ferner sind sterisch gehinderte Phenole, Hydrochinone, substituierte Vertreter dieser Gruppe und Mischungen derselben, vorzugsweise in Konzentrationen bis 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2,0 Gew.% eingesetzt werden.

Gleit-und Entformungsmittel, die in der Regel in Mengen bis zu 1 Gew.% der thermoplastischen Masse zugesetzt werden, sind Stearinsäuren, Stearylalkohol, Stearinsäureester und -amide sowie die Fettsäureester des Pentaerythrits.

Ferner können organische Farbstoffe, wie Nigrosin, Pigmente, z.B. Titandioxid, Cadmiumsulfid, Cadmiumsulfidselenid, Phthalocyanine, Ultramarinblau oder Ruß zugesetzt werden.

Die Herstellung der erfindungsgemäßen Formmassen kann durch Mischen der Komponenten A bis D und gegebenenfalls F bis G in an sich bekannten Mischvorrichtungen erfolgen, wobei darauf zu achten ist, daß das fluorhaltige Ethylenpolymerisat eine entsprechende Teilchengröße aufweist und homogen in der Formmasse verteilt wird.

Als besonders bevorzugt hat es sich herausgestellt, die Komponente D in Form einer wäßrigen Dispersion mit einem Feststoffgehalt von 5 bis 50, insbesondere 10 bis 50 Gew.% einzusetzen und diese Dispersion in eine Schmelze des Polyesters A einzumischen.

Dies kann vor oder nach der Zugabe der restlichen Komponenten B, C und ggf. E, F und G erfolgen.

In einigen Fällen hat es sich als vorteilhaft herausgestellt, ein Konzentrat (Batch) von PTFE-haltigem Polyester herzustellen und diesen dann mit den anderen Komponenten in der Schmelze zu vermischen.

Die Einarbeitung des PTFE wird bevorzugt auf einem Extruder vorgenommen, wobei Temperaturen von 240 bis 330, insbesondere von 240 bis 300°C angewandt werden. Das bei der Abmischung auf dem Extruder freiwerdende Wasser kann über Entgasungseinrichtungen am Extruder entfernt werden.

Nach Abmischung auf dem Extruder können die Massen in an sich bekannter Weise weiterverarbeitet werden, z.B. zu Formkörpern und Folien.

Die erfindungsgemäßen Formmassen zeichnen sich durch gute Flammfestigkeit aus und tropfen auch bei geringen Anteilen an PTFE bzw. fluorhaltigem Ethylenpolymerisat nicht ab.

Darüber hinaus können sie auf einfache und sicherheitstechnisch unbedenkliche Weise hergestellt werden, ohne daß gesundheitliche Risiken zu befürchten sind.

## Beispiele

### Herstellung eines Polytetrafluorethylen-Polybutylenterephthalat-Vorprodukts (Batch)

98 Gew.% Polybutylenterephthalat (PBTP, Typ Ultradur B 4500 der Firma BASF AG) mit einer relativen Viskosität von 1,6 bestimmt als 0,5 gew.%ige Lösung in Phenol/o-Dichlorbenzol 1:1 bei 25°C wurde in einem ZSK 53-Extruder der Firma Werner und Pfleiderer aufgeschmolzen. In die Polymerschmelze wurden 2 Gew.% Polytetrafluorethylen (bezogen auf den Feststoffanteil in der Dispersion) in Form einer wäßrigen Dispersion eingepumpt. Die Teflon®-Dispersion war vom Typ 30 N der Firma DuPont und wurde vor dem Einpumpen mit Wasser auf einen Feststoffgehalt von 10 Gew.% verdünnt.

Beim Extrudieren wurde das Wasser abgezogen.

Die Extrudertemperatur wurde auf 270°C, die Umdrehungszahl auf 250 Umdrehungen/min und der Durchsatz auf 50 kg/h eingestellt.

Nach Extrusion wurde der Polymerstrang gekühlt, granuliert und getrocknet.

In Beispiel 25 wurde zur Herstellung des PTFE-Batches an Stelle von Polybutylenterephthalat Polyethylenterephthalat (PETP, Typ Ultradur A 3700 der Firma BASF AG) verwendet.

Die mittlere Teilchengröße des PTFE (Zahlenmittelwert) in der Dispersion lag im Bereich von 0,25 bis 5 µm.

Zur Herstellung der erfindungsgemäßen Formmassen wurde dieser Batch mit weiterem Polyester (A) und den Komponenten B, C und gegebenenfalls E, F und G auf einen Extruder aufgeschmolzen, ausgetragen und pelletiert. Zur Bestimmung des Brandverhaltens wurden gemäß der Vorschriften der UL 94

Norm der Underwriters Laboratories 1/16-Zoll Blockstäbe gespritzt.

Als Polyester A wurde das auch im Batch verwendete Polybutylenterephthalat eingesetzt. (Ausnahme: Beispiel 25, wo als Polyester A Polyethylenterephthalat vom Typ Ultradur A 3700 der Fa. BASF AG eingesetzt wurde.)

An Flammschutzmitteln B) wurden folgende Verbindungen eingesetzt:

$B_1$ bromiertes Tetrabrombisphenol A-Polycarbonat mit Phenol-Endgruppen (BC 52, Fa. Great Lakes)

$B_2$ N,N'-Ethylen-bis(tetrabromphthalimid) (Saytex BT 93, Saytech Inc.)

$B_3$ Octabromdiphenylether

$B_4$ Decabromdiphenylether

$B_5$ bromiertes Polystyrol (Pyrocheck 68 PB, Fa. Ferro Chem., Bromgehalt 68 Gew.%)

$B_6$ bromiertes Tetrabrombisphenol A-Polycarbonat mit Tribromphenol-Endgruppen (BC 58, Fa. Great Lakes)

$B_7$ Perbrom-1,4-diphenoxybenzol (BT 120, Ethyl Corporation)

$B_8$ Ethylenbis-dibrom-norbornan-dicarboximid (BN 451, Saytech Inc.)

$B_9$ Tetrabromphthalsäureanhydrid (RB 49, Saytech Inc.)

$B_{10}$ Tetrabromphthalsäure-polyether (RB 79, Saytech Inc.)

$B_{11}$ Tetrabrombisphenol A (RB 100, Saytech Inc.)

$B_{12}$ 4,4'-Di(2,3-dibrompropyloxy)-3,3',5,5'-Tetrabrombisphenol A

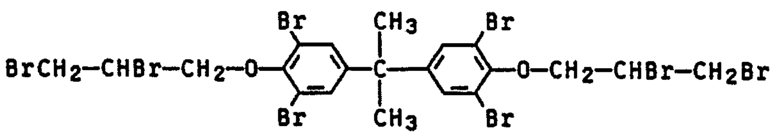

(PE 68, Great Lakes)

$B_{13}$ Poly(2,6-dibromphenylen)oxid (PO 64P, Great Lakes)

$B_{14}$ 1,3-Di(tribromphenoxy)propan (FF 680, Great Lakes)

$B_{15}$ bromiertes Epoxiharz auf Basis Epichlorhydrin/Tetrabrombisphenol A (F 2310, Fa. Makhteshim Chemicals)

$B_{16}$ Poly(pentabrombenzyl)acrylester (FR 1025 der Fa. Dead Sea Bromine)

$B_{17}$ 1,2-Di(pentabromphenoxy)ethan

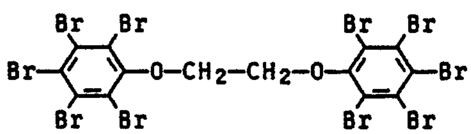

(Pyrocheck 77 B, Fa. Ferro Chem.)

$B_{18}$ Hexabromcyclododecan (FR 1026, Fa. Dead Sea Bromine)

$B_{19}$ Hexabrombenzol

$B_{20}$ bromiertes Polystyrol mit einem Bromgehalt von 60 Gew.% (Pyrocheck 60 PB, Fa. Ferro Chem.)

Als schlagzäh modifizierende Elastomere wurden folgende Komponenten eingesetzt

$E_1$ Pfropfkautschuk mit einer Pfropfgrundlage (75 Gew.%) aus vernetztem n-Butylacrylat und einer Pfropfhülle (25 Gew.%) aus Styrol und Acrylnitril im Gewichtsverhältnis 3/1 (hergestellt nach dem Verfahren der DE-A-24 44 584)

$E_2$ Pfropfkautschuk mit einer Pfropfgrundlage (70 Gew.%) aus vernetztem Polybutadien, 8 Gew.% einer ersten Pfropfhülle aus Styrol und 22 Gew.% einer zweiten Pfropfhülle aus Methylmethacrylat.

Als Komponente F wurden eingesetzt:

$F_1$ Glasfasern

$F_2$ Glaskugeln

$F_3$ Wollastonit

Als Komponente G wurden eingesetzt:

$G_1$ Polycarbonat auf der Basis Bisphenol A mit einer relativen Viskosität von 1,36, gemessen in 0,5 gew.%iger Lösung in Dichlormethan bei 25°C.

$G_2$ Polyamid-6 (Poly-ε-caprolactam) mit einer rel. Viskosität von 2,7 in 96 gew.%iger Schwefelsäure (1 g/100 ml) bei 25°C (Ultramid B3 der BASF AG)

Die Zusammensetzung derr einzelnen Massen ist der nachstehenden Tabelle 1 zu entnehmen.

Dabei ist zu berücksichtigen, daß sich die Angaben bzgl. des PTFE-Gehalts immer auf den reinen PTFE-Anteil beziehen; da das PTFE in Form eines Batches zugegeben wurde, entspricht der PTFE-Gehalt nicht der Menge an zugegebenem Batch.

Die sei für Beispiel 2 erläutert.

Bruttozusammensetzung:
82,75 Gew.% Polybutylenterephthalat
13,0 Gew.% $B_1$
4,0 Gew.% $Sb_2O_3$
0,25 Gew.% PTFE

Diese Masse wurde erhalten durch Abmischen von
70,5 Gew.% Polybutylenterephthalat
13,0 Gew.% $B_1$
4,0 Gew.% $Sb_2O_3$
12,5 Gew.% 2 % PTFE-Batch in Polybutylenterephthalat

Entsprechend ist auch die Berechnung für die Massen der restlichen Beispiele vorzunehmen. In Tabelle 1 ist unter der Rubrik D* die Menge an eingesetztem PTFE-Batch abzulesen.

Tabelle 1 (alle Mengenangaben in Gew.%)

| Beispiel Nr. | A | B Typ | B Menge | C | D | D* | E Typ | E Menge | F Typ | F Menge | G Typ | G Menge |
|---|---|---|---|---|---|---|---|---|---|---|---|---|
| 1 | 79,09 | $B_1$ | 16,0 | 4,9 | 0,01 | 0,5 | - | - | - | - | - | - |
| 2 | 82,75 | $B_1$ | 13,0 | 4,0 | 0,25 | 12,5 | - | - | - | - | - | - |
| 3 | 83,85 | $B_2$ | 11,2 | 4,7 | 0,25 | 12,5 | - | - | - | - | - | - |
| 4 | 85,55 | $B_3$ | 9,5 | 4,7 | 0,25 | 12,5 | - | - | - | - | - | - |
| 5 | 88,1 | $B_4$ | 7,5 | 4,1 | 0,3 | 15,0 | - | - | - | - | - | - |
| 6 | 86,0 | $B_5$ | 10,0 | 3,9 | 0,1 | 5,0 | - | - | - | - | - | - |
| 7 | 84,0 | $B_{20}$ | 11,6 | 4,1 | 0,3 | 15,0 | - | - | - | - | - | - |
| 8 | 59,0 | $B_4$ | 7,0 | 3,8 | 0,2 | 10,0 | - | - | $F_1$ | 30,0 | - | - |
| 9 | 67,4 | $B_2$ | 8,9 | 3,5 | 0,2 | 10,0 | - | - | $F_1$ | 20,0 | - | - |
| 10 | 75,9 | $B_6$ | 10,3 | 3,5 | 0,3 | 15,0 | - | - | $F_1$ | 10,0 | - | - |
| 11 | 78,0 | $B_7$ | 8,0 | 3,9 | 0,1 | 5,0 | - | - | $F_3$ | 10,0 | - | - |
| 12 | 59,0 | $B_1$ | 16,0 | 4,9 | 0,1 | 5,0 | $E_1$ | 20,0 | - | - | - | - |
| 13 | 58,5 | $B_8$ | 12,8 | 3,5 | 0,2 | 10,0 | - | - | $F_1$ | 25,0 | - | - |
| 14 | 70,6 | $B_9$ | 10,1 | 4,1 | 0,2 | 10,0 | - | - | $F_1$ | 15,0 | - | - |
| 15 | 73,15 | $B_{10}$ | 17,0 | 4,5 | 0,35 | 17,5 | - | - | $F_1$ | 5,0 | - | - |
| 16 | 48,6 | $B_{11}$ | 12,1 | 4,1 | 0,20 | 10,0 | - | - | $F_1$ | 35,0 | - | - |

Tabelle 1 (alle Mengenangaben in Gew.%)

| Beispiel Nr. | A | B Typ | B Menge | C[2)] | D | D* | E Typ | E Menge | F Typ | F Menge | G Typ | G Menge |
|---|---|---|---|---|---|---|---|---|---|---|---|---|
| 17 | 65,25 | $B_{12}$ | 10,4 | 4,2 | 0,15 | 7,5 | $E_2$ | 20,0 | - | - | - | - |
| 18 | 66,4 | $B_{13}$ | 9,7 | 3,6 | 0,3 | 15,0 | - | - | $F_3$ | 20,0 | - | - |
| 19 | 66,1 | $B_{14}$ | 9,7 | 4,0 | 0,2 | 10,0 | - | - | $F_1$ | 10,0 | - | - |
| | | | | | | | | | $F_3$ | 10,0 | | |
| 20 | 70,65 | $B_{15}$ | 14,7 | 4,5 | 0,15 | 7,5 | - | - | $F_2$ | 10,0 | - | - |
| 21 | 74,95 | $B_{16}$ | 10,4 | 4,3 | 0,35 | 17,5 | - | - | $F_1$ | 5,0 | - | - |
| | | | | | | | | | $F_2$ | 5,0 | | |
| 22 | 71,95 | $B_{17}$ | 9,0 | 3,9 | 0,15 | 7,5 | - | - | $F_2$ | 15,0 | - | - |
| 23 | 76,0 | $B_{18}$ | 9,5 | 4,3 | 0,2 | 10,0 | - | - | $F_2$ | 10,0 | - | - |
| 24 | 40,2 | $B_{19}$ | 6,2 | 3,2 | 0,4 | 20,0 | - | - | $F_1$ | 50,0 | - | - |
| 25 | 84,25[1)] | $B_1$ | 12,0 | 3,6 | 0,15 | 7,5[1)] | - | - | - | - | - | - |
| 26 | 68,8 | $B_1$ | 14,0 | 4,7 | 0,4 | 20,0 | - | - | - | - | $G_1$ | 12,1 |
| 27 | 59,0 | $B_1$ | 16,0 | 4,9 | 0,1 | 5,0 | - | - | - | - | $G_2$ | 20,0 |
| 28 | 54,3 | $B_2$ | 11,0 | 4,4 | 0,3 | 15,0 | $E_1$ | 20,0 | F1 | 10,0 | | |

1) Polyethylenterephthalat anstelle von Polybutylenterephthalat

2) Als Komponente C wurde in allen Fällen $Sb_2O_3$ eingesetzt

Die Brandprüfung nach UL 94 ergab in allen Fällen die Bewertung V0 (d.h. nicht abtropfend).

Vergleichsbeispiel 1

Es wurde eine Formmasse aus

82,75 Gew.% Polybutylenterephthalat
0,25 Gew.% PTFE (Teflon 6 der Fa. DuPont) mittlere Teilchengröße 0,3 bis 0,7 mm
13,0 Gew.% $B_1$
4,0 Gew.% $Sb_2O_3$

wie in den Beispielen 1 bis 27 durch Abmischen auf dem Extruder hergestellt.
Die Brandprüfung nach UL 94 ergab die Bewertung V2 (d.h. brennend abtropfende Teile).

Vergleichsbeispiel 2

Durch Abmischen auf dem Extruder wurde eine Formmasse aus

79,1 Gew.% Polybutylenterephthalat
16,0 Gew.% $B_1$
4,9 Gew.% $Sb_3O_3$

hergestellt.
Auch in diesem Fall ergab sich die Bewertung V2 nach UL 94.

## Ansprüche

1. Flammgeschützte thermoplastische Formmassen auf der Basis aromatischer Polyester, enthaltend als wesentliche Komponenten
A) 20 bis 90 Gew.%
eines Polyesters einer aromatischen Dicarbonsäure und einem aliphatischen oder aromatischen Glykol
B) 5 bis 30 Gew.%
eines Flammschutzmittels
C) 0 bis 15 Gew.%
einer synergistisch wirkenden Metallverbindung eines Metalls der fünften Hauptgruppe des Periodensystems
D) 0,01 bis 3 Gew.%
eines fluorhaltigen Ethylenpolymerisats, welches homogen verteilt in der Formmasse vorliegt und einen mittleren Teilchendurchmesser (Zahlenmittelwert) von 0,05 bis 10 $\mu$ aufweist,
sowie darüber hinaus
E) 0 bis 50 Gew.%
eines schlagzäh modifizierenden Kautschuks
F) 0 bis 50 Gew.%
faser-oder teilchenförmigen Füllstoffen oder deren Mischungen
G) 0 bis 70 Gew.%
eines Polycarbonats oder eines Polyamids
2. Flammgeschützte thermoplastische Formmassen nach Anspruch 1, gekennzeichnet durch folgende Gehalte an den Komponenten A bis G
A) 50 bis 85 Gew.%
B) 7 bis 25 Gew.%
C) 5 bis 12 Gew.%
D) 0,05 bis 2 Gew.%

E) 0 bis 50 Gew.%
F) 0 bis 50 Gew.%
G) 0 bis 50 Gew.%

3. Flammgeschützte thermoplastische Formmassen nach den Ansprüchen 1 und 2, enthaltend
E) 5 bis 40 Gew.% eines schlagzäh modifizierenden Kautschuks.

4. Flammgeschützte thermoplastische Formmassen nach den Ansprüchen 1 bis 3, enthaltend
F) 8 bis 40 Gew.% eines faser-oder teilchenförmigen Füllstoffs

5. Flammgeschützte thermoplastische Formmassen nach den Ansprüchen 1 bis 4 enthaltend
G) 5 bis 45 Gew.% eines Polycarbonats.

6. Verfahren zur Herstellung der Formmassen gemäß den Ansprüchen 1 bis 5, dadurch gekennzeichnet, daß man das fluorhaltige Ethylenpolymerisat D in Form einer wäßrigen Dispersion mit einem Feststoffgehalt von 10 bis 50 Gew.% in eine Schmelze des Polyesters A einmischt und vor oder nach der Zugabe der Komponente D die Komponenten B, C, E, F und G zugibt.

7. Verwendung der flammgeschützten thermoplastischen Formmassen gemäß den Ansprüchen 1 bis 5 oder wie gemäß Anspruch 6 erhältlich zur Herstellung von Formkörpern.

8. Formkörper, erhältlich aus flammgeschützten thermoplastischen Formmassen gemäß den Ansprüchen 1 bis 5 oder wie gemäß Anspruch 6 erhalten als wesentlichen Komponenten.